# FASCICULE DE BREVET EUROPEEN

(11) **EP 2 912 404 B1**
(45) Date de publication et mention de la délivrance du brevet: **27.03.2019**
(21) Numéro de dépôt: 13789846.6
(22) Date de dépôt: 10.10.2013
(51) Int. Cl.: B25B 11/02, G01B 3/14

(54) **PROCÉDÉ DE FABRICATION D'UN GABARIT POUR DES TUBES PRÉSENTANT DES TRONÇONS CINTRÉS, ET GABARIT RÉALISÉ**
VERFAHREN ZUR HERSTELLUNG EINER HALTEVORRICHTUNG FÜR RÖHREN MIT GEBOGENEN ABSCHNITTEN UND RESULTIERENDE VORRICHTUNG
METHOD FOR PRODUCING A JIG FOR TUBES HAVING BENT SECTIONS, AND RESULTING JIG

(30) Priorité: 25.10.2012 FR 1202844
(43) Date de publication de la demande: 02.09.2015
(73) Titulaire: ADMC Holding, LLC, Lebanon OH 45036 (US)
(72) Inventeur: JAUBERT, Philippe, 32430 Cologne (FR); PELLAT, Régis, 31770 Colomiers (FR)
(74) Mandataire: Glück Kritzenberger Patentanwälte PartGmbB
(86) Numéro de dépôt international: PCT/FR2013/000264
(87) Numéro de publication internationale: WO 2014/064345

(56) Documents cités:
- WO-A2-03/078921
- DE-A1-102005 007 441
- DE-B3-102010 000 499
- US-A- 5 208 995
- US-A1- 2007 011 891

## Description

L'invention concerne un procédé de fabrication d'un gabarit pour des tubes présentant des tronçons cintrés et vise de façon plus spécifique la fabrication d'un gabarit de formage conçu pour la réalisation, par formage thermique, de tubes en matière plastique, et/ou un gabarit de contrôle de la géométrie de tubes cintrés. L'invention s'étend également aux gabarits réalisés par la mise en oeuvre de ce procédé.

Les tubes, dits tubes plastiques, en matières plastiques, du type notamment polymères thermoplastiques, tel que le polyamide, utilisés notamment dans le domaine automobile et le domaine aéronautique, et présentant des tronçons cintrés, sont actuellement réalisés par formage thermique de tubes disposés dans des gabarits de formage comportant :
- un tube métallique, dit tube de moulage, de diamètre sensiblement supérieur à celui des tubes plastiques, cintré et/ou formé de façon à présenter le profil longitudinal des dits tubes plastiques, et comprenant une paroi périphérique partiellement découpée de façon à permettre l'insertion, le maintien puis le retrait d'un tube plastique,
- et une base sur laquelle le tube de moulage est solidarisé par l'intermédiaire d'éléments de liaison ponctuels répartis le long du dit tube de moulage et adaptés pour rigidifier ce dernier.

La fabrication de chacun de ces gabarits de formage requiert, en premier lieu, de réaliser le tube de moulage, et à cet effet, de :
- cintrer et/ou former un tube métallique de diamètre sensiblement supérieur à celui du tube plastique, de façon à réaliser un tube de moulage présentant le profil longitudinal du dit tube plastique,
- découper partiellement la paroi périphérique du tube de moulage de façon à permettre l'insertion du tube plastique, son maintien pendant la phase de formage thermique, puis son retrait après formage.

Cette fabrication comporte, ensuite, une étape de rigidification du tube de moulage qui consiste à le solidariser sur une base par l'intermédiaire d'éléments de liaison ponctuels répartis le long du dit tube de moulage.

Compte tenu de la complexité des profils longitudinaux des tubes plastiques à réaliser au moyen de ces gabarits de formage, la fabrication des tubes de moulage (cintrage, découpes...) est entièrement manuelle, et par conséquent les caractéristiques géométriques finales des gabarits de formage dépendent directement de l'expérience et du savoir-faire du personnel qualifié chargé de cette fabrication.

De ce fait, quels que soient cette expérience et ce savoir-faire, il s'avère qu'il existe des différences géométriques relativement conséquentes entre les gabarits de formage censés être identiques.

Or, compte tenu des cadences de production requises et de la durée de réalisation relativement longue d'un tube plastique (temps de chauffe, manutentions...), chaque référence de tube plastique nécessite l'utilisation de plusieurs gabarits de formage.

Par conséquent, dans la pratique, il existe une hétérogénéité non négligeable entre les tubes plastiques d'une même référence réalisés au moyen de gabarits de formage différents, avec pour conséquences, notamment, des problèmes de montage potentiels des tubes plastiques, voire même des mises au rebut de ces derniers.

De par leur conception, de tels gabarits pourraient également être utilisés en vue de réaliser un contrôle de la géométrie de tubes cintrés. Toutefois, dans la pratique, ces gabarits ne sont pas utilisés à des fins de contrôle en raison notamment de leur coût élevé de fabrication, et du temps requis pour l'introduction de chaque tube à contrôler dans le tube de moulage partiellement découpé jouant le rôle de tube de contrôle, puis le retrait de ce tube à contrôler.

Ces opérations de contrôle sont, en fait, actuellement effectuées au moyen de gabarits de contrôle spécifiquement conçus pour cette fonction comportant :
- soit, tel que notamment décrit dans les brevets US 6,029,333, US 2007/011891, WO 03/078921, des plaques planes solidarisées sur une base, dédiées chacune au guidage d'un tronçon rectiligne du tube et sur l'arête supérieure rectiligne desquelles sont montés des organes de guidage du dit tronçon rectiligne de tube,
- soit, tel que notamment décrit dans les brevets US 5,412,877, US 5,208,995, DE 10 2005 007441, en lieu et place des plaques planes, des blocs parallélépipédiques dans la face supérieure desquels est ménagée une goulotte rectiligne adaptée pour loger un tronçon rectiligne du tube,
- soit, tel que décrit dans le brevet DE 10 2010 000499, des blocs de guidage dans la face supérieure desquels est ménagée une goulotte, reposant chacun sur un bloc-support solidarisé sur une base, et agencés pour que les goulottes des dits blocs de guidage forment un conduit continu ou des tronçons de conduit, de guidage du tube.

La présente invention vise quant à elle à fournir des gabarits de faible coût de revient reproductibles simplement de façon industrielle, et de conception adaptée pour permettre de les utiliser soit à des fins de formage de tubes plastiques, soit à des fins de contrôle de tubes cintrés.

A cet effet, l'invention vise, en premier lieu, un procédé de fabrication d'un gabarit pour le formage thermique et/ou le contrôle d'un tube de fibre neutre (x) selon la revendication 1.

Le procédé de l'invention consiste donc à :
- « scinder » chaque tube en une pluralité de segments comportant chacun un des n tronçons cintrés du dit tube, présentant la particularité de constituer des segments « plans », c'est à dire des segments dont la fibre neutre s'étend dans un plan (A noter que par fibre neutre, on entend désigner, selon la théorie des poutres, la ligne passant par le centre de gravité des sections droites du tube, c'est-à-dire, pour un tube cylindrique dont la section droite est symétrique, la ligne passant par le milieu du dit tube),
- à réaliser n gabarits unitaires de conception et réalisation très simples car dédiés chacun à un segment de tube « plan » et comportant donc des conduits de guidage également « plans »,
- et à reconstituer un gabarit global en assemblant entre eux les gabarits unitaires.

L'intérêt majeur d'un tel procédé réside dans la simplicité des gabarits unitaires, tant du point de vue de leur conception que de leur réalisation, qui conduit à des coûts de fabrication très avantageux, mettant en oeuvre des techniques de fabrication de type industriel garantissant la parfaite reproductibilité des gabarits.

De plus, un tel procédé peut notamment être mis en oeuvre en vue de la fabrication de gabarits de contrôle et, à cet effet, on réalise avantageusement des gabarits unitaires dotés de moyens de guidage délimitant un conduit de guidage global de section non rétentive adaptée pour permettre l'introduction du tube dans le dit conduit et le retrait du dit tube.

Ce procédé peut également être notamment mis en oeuvre en vue de la réalisation de gabarits de formage thermique de tubes en matière plastique, et, à cet effet, on réalise avantageusement des gabarits unitaires dotés de moyens de guidage délimitant un conduit de guidage global de section rétentive adaptée pour permettre l'introduction et le maintien du tube dans le dit conduit puis le retrait du dit tube.

Par ailleurs, selon l'invention, chaque tronçon de conduit de guidage peut consister en un conduit continu. Toutefois, selon l'invention, on réalise des gabarits unitaires dotés de moyens de guidage constitués d'organes de guidage ponctuel comportant une gorge de section conjuguée de celle du tube, formant un conduit matérialisé par une succession d'appuis ponctuels du dit tube.

De plus, selon l'invention, on réalise des gabarits unitaires comprenant :
- une base comportant au moins une plaque plane longitudinale, dite plaque de base inférieure, dans laquelle sont ménagées une pluralité de lumières alignées le long d'une ligne longitudinale parallèle à la fibre neutre plane (x'),
- des organes de guidage plans adaptés pour s'enficher dans les lumières de la plaque de base inférieure de chaque base, de façon que les gorges des dits organes de guidage soient axées sur la fibre neutre (x').

Une telle conception conduit, en effet, à la réalisation de gabarits dont les éléments essentiels (base, organes de guidage) sont constitués d'éléments plans, c'est-à-dire d'éléments pouvant être réalisés de façon industrielle par des découpes effectuées dans une plaque au moyen d'une technique de découpe du type par exemple découpe laser.

De plus, on réalise avantageusement selon l'invention une gamme d'organes de guidage ponctuel dotés de gorges présentant des plans de symétrie, incluant la fibre neutre (x'), dont l'inclinaison par rapport au plan de chaque plaque de base inférieure varie sur une plage de valeurs comprises entre 0° et 90°.

Une telle gamme d'organes de guidage permet, en effet, de reconstituer facilement des conduits assurant un parfait guidage des tubes, et ce malgré le caractère ponctuel des organes de guidage.

Par ailleurs, selon l'invention destiné à garantir une parfaite rigidité des gabarits, on réalise des gabarits unitaires dont la base est constituée de deux plaques de base planes assemblées au moyen d'organes de fixation aptes à les maintenir parallèles, à une distance prédéterminée l'une de l'autre :
- une plaque de base inférieure dotée de lumières dans lesquelles vient s'enficher une portion, dite d'ancrage, des organes de guidage,
- et une plaque, dite plaque de base supérieure, percée de lumières au travers desquelles s'étend une portion, dite de guidage, des organes de guidage, dans laquelle est ménagée la gorge de guidage.

De plus, toujours dans l'optique d'augmenter la rigidité des gabarits, on réalise, en outre, selon l'invention, des organes de guidage comportant une portion médiane de dimensions adaptées pour former une entretoise définissant la distance séparant les deux plaques de base de chaque base.

Par ailleurs, on réalise, avantageusement selon l'invention, une plaque de base inférieure dotée de lumières traversantes, et des organes de guidage dotés, dans le prolongement de leur portion d'ancrage, d'une portion déformable de verrouillage des dits organes de guidage.

Cette portion déformable de verrouillage des organes de guidage est, en outre, avantageusement conçue de façon à être frangible au-delà d'un degré prédéterminé de déformation, de façon à permettre un éventuel démontage des gabarits unitaires.

Par ailleurs, de façon avantageuse selon l'invention, on réalise des gabarits unitaires comportant, en vue de leur assemblage avec un gabarit unitaire juxtaposé, une plaque d'interface dotée, pour chaque plaque de base, d'une lumière d'ancrage de la dite plaque de base.

De plus, on réalise avantageusement une base dont la plaque de base inférieure comporte, pour chaque plaque d'interface, une lumière ménagée de façon à être accolée à la dite plaque d'interface, et on enfiche, dans la dite lumière, un organe de guidage doté de moyens de fixation adaptés pour le solidariser à la plaque d'interface.

Ces éléments d'assemblage concourent à une réalisation de gabarits constitués d'éléments plans (base, organes de guidage, plaque d'assemblage) réalisables de façon industrielle par des découpes effectuées dans une plaque au moyen d'une technique de découpe du type par exemple découpe laser.

Par ailleurs, en vue de la réalisation d'un gabarit pour le formage thermique d'un tube, on ménage, avantageusement selon l'invention, au niveau de l'extrémité libre de la base d'au moins un des gabarits unitaires dédiés à un segment d'extrémité du tube, un oeillet destiné au maintien par suspension du gabarit, notamment lors de la phase de formage thermique réalisée dans un four.

L'invention s'étend à un gabarit pour le formage thermique et/ou le contrôle d'un tube de fibre neutre (x) selon la revendication 10. Les modes particuliers de réalisation de l'invention sont définis dans les revendications dépendantes 2 à 9.

D'autres caractéristiques, buts et avantages de l'invention ressortiront de la description détaillée qui suit en référence aux dessins annexés qui en représentent à titre d'exemple non limitatif un mode de réalisation préférentiel. Sur ces dessins :
- la figure 1 est une vue en perspective d'un gabarit conforme à l'invention destiné au formage thermique d'un tube représenté positionné sur ce gabarit,
- la figure 2 est une vue en perspective de ce tube,
- la figure 3 est une vue en perspective du gabarit de la figure 1 représenté seul, sans le tube,
- la figure 4 est une vue en perspective de ce gabarit dépourvu des organes de guidage,
- les figures 5 et 6 sont des vues frontales de deux organes de guidage équipant le gabarit selon l'invention,
- la figure 7 est une vue de dessus d'une des plaques de base de ce gabarit,

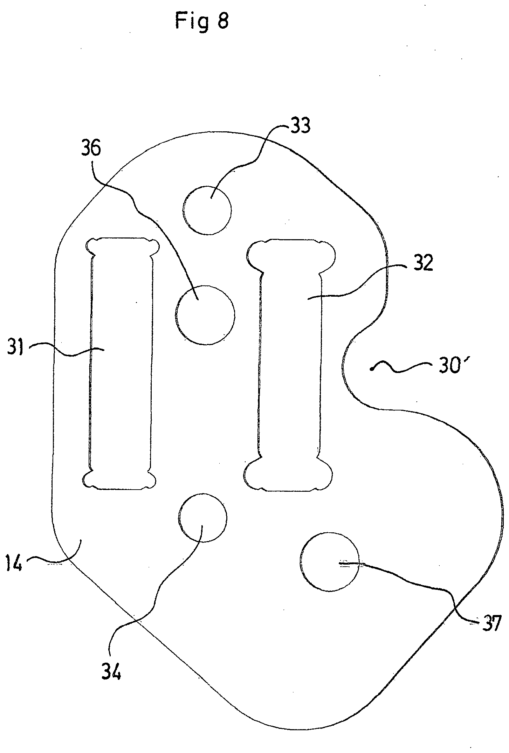

- et la figure 8 est une vue frontale d'une des plaques d'interface de ce gabarit.

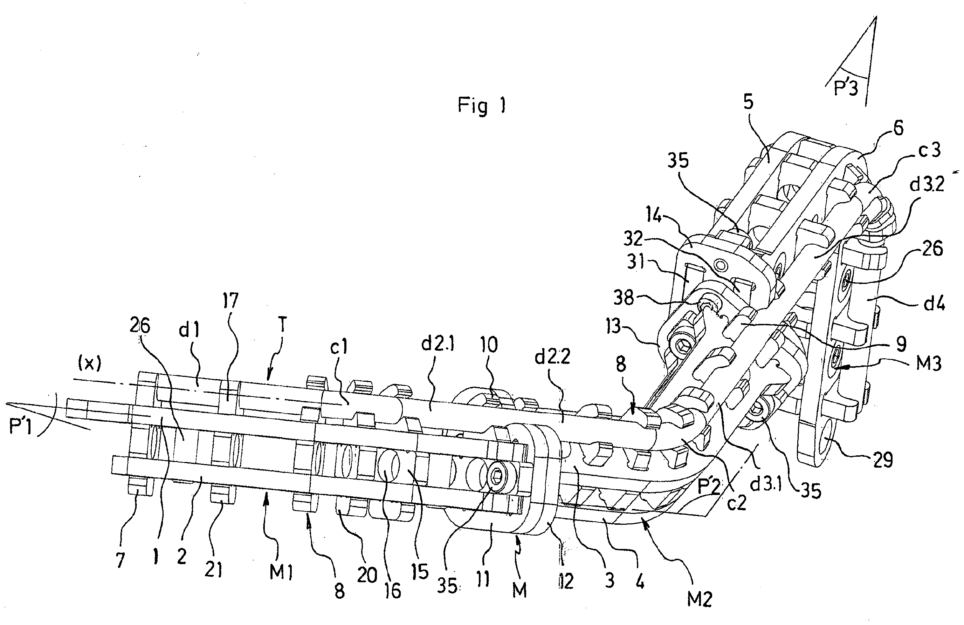

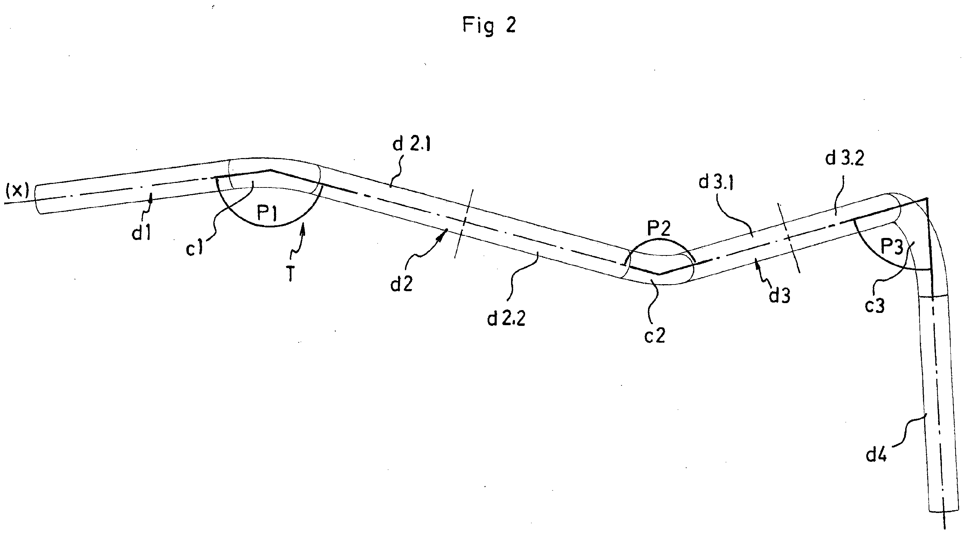

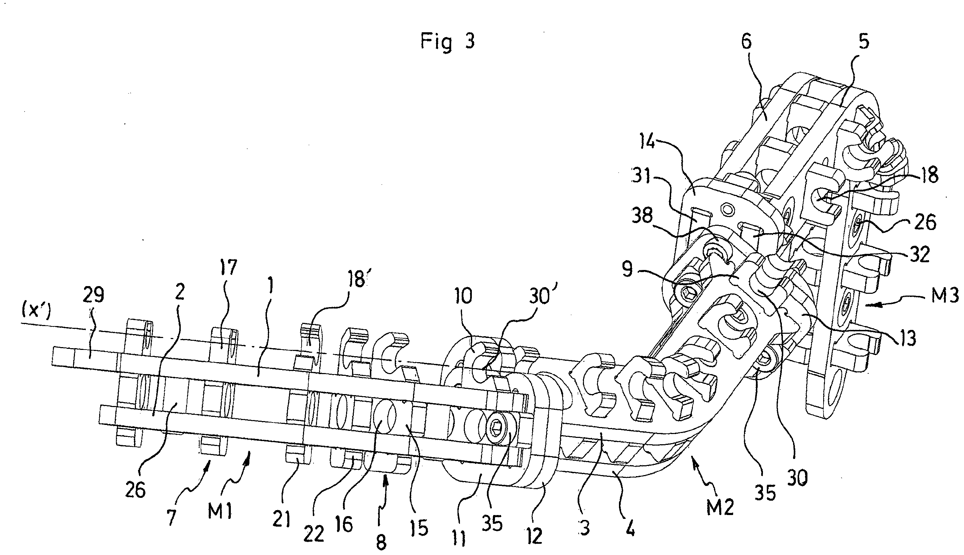

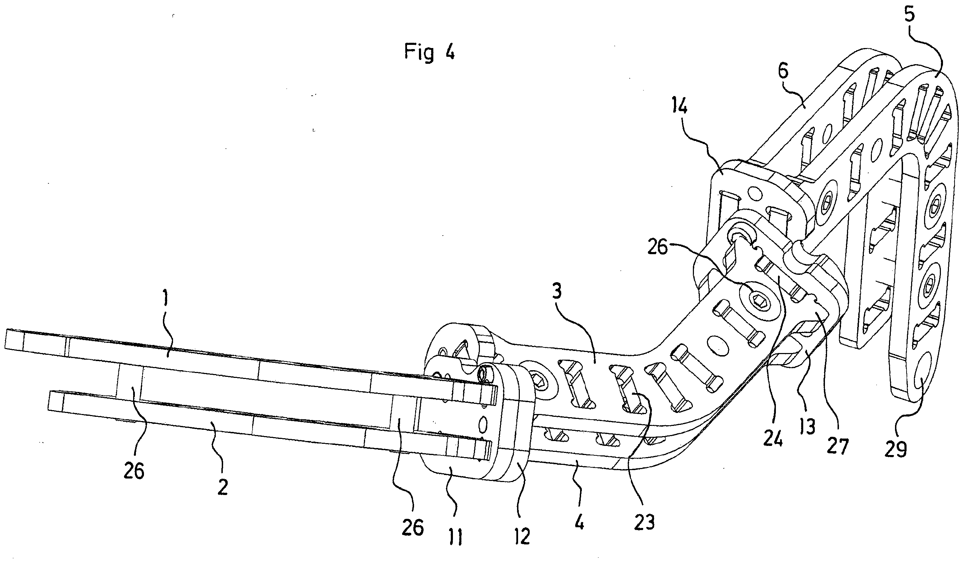

Le gabarit M selon l'invention représenté notamment aux figures 1, 3 et 4 consiste en un gabarit de formage conçu pour la réalisation, par formage thermique, de tubes en matière plastique, tel que le tube T présentant une fibre neutre (x), représenté à la figure 2 qui :
- comporte deux tronçons rectilignes d'extrémité d1, d4, et trois tronçons cintrés c1, c2, c3 reliés par des tronçons rectilignes respectivement d2, d3,
- est considéré, en vue de la réalisation du gabarit M selon le procédé de l'invention, comme consistant en un élément tubulaire constitué de l'assemblage bout à bout de trois segments de tube plans (c'est à dire dont la fibre neutre est plane) :
   ▪ un premier segment constitué du tronçon rectiligne d1, du tronçon cintré c1 et d'une première portion de longueur d2.1 du tronçon rectiligne d2 (généralement la moitié de ce tronçon d2), le dit premier segment comportant une fibre neutre s'étendant dans un plan P1 correspondant au plan de cintrage du tronçon cintré c1,
   ▪ un deuxième segment constitué de la seconde portion d2.2 du tronçon rectiligne d2, du tronçon cintré c2 et d'une première portion de longueur d3.1 du tronçon rectiligne d3 (généralement la moitié de ce tronçon d3), le dit deuxième segment comportant une fibre neutre s'étendant dans un plan P2 correspondant au plan de cintrage du tronçon cintré c2,
   ▪ et un troisième segment constitué de la seconde portion d3.2 du tronçon rectiligne d3, du tronçon cintré c3 et du tronçon rectiligne d4, le dit troisième segment comportant une fibre neutre s'étendant dans un plan P3 correspondant au plan de cintrage du tronçon cintré c3.

Sur la base de cette décomposition du tube T en trois segments de tube plans, le gabarit M selon l'invention se compose de trois gabarits unitaires M1, M2, M3 dédiés chacun à un des dits segments de tube et adaptés pour délimiter chacun un tronçon de conduit de guidage présentant le même profil longitudinal que celui du dit segment de tube, et consistant donc en un tronçon de conduit de guidage plan dont la fibre neutre (x') coïncide avec la fibre neutre (x) du segment de tube.

Chacun de ces gabarits M1, M2, M3 se compose d'éléments obtenus par découpes dans des plaques planes et consistant principalement en :
- une base composée de deux plaques de base planes identiques consistant en une plaque de base dite inférieure, respectivement 1, 3, 5, et en une plaque de base dite supérieure, respectivement 2, 4, 6,
- des organes de guidage ponctuel 7-10 adaptés pour délimiter les tronçons de conduit de guidage,
- des plaques d'interface 11-14 destinées à l'assemblage bout à bout des gabarits unitaires M1, M2, M3.

En premier lieu, les organes de guidage 7-10 comportent une gorge de section de diamètre sensiblement supérieur au diamètre du tube T, adaptée pour former un conduit matérialisé par une succession d'appuis ponctuels du dit tube. Ces organes de guidage sont déclinés en une gamme d'organes de guidage ponctuel dotés de gorges présentant des plans de symétrie incluant la fibre neutre (x'), dont l'inclinaison par rapport aux plans des plaques de base 2-6 varie sur une plage de valeurs comprises entre 0° et 90°. A titre d'exemple :

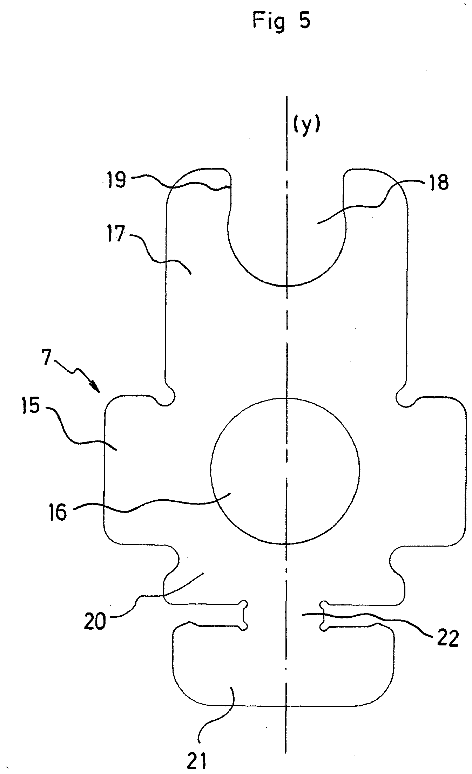

- la figure 5 représente ainsi un organe de guidage 7 doté d'une gorge 18 dont le plan de symétrie est incliné d'un angle de 90° par rapport au plan des plaques de base 1-6, et coïncide donc avec un plan (y) incorporant la fibre neutre (x') et orthogonal au dit plan des plaques de base,

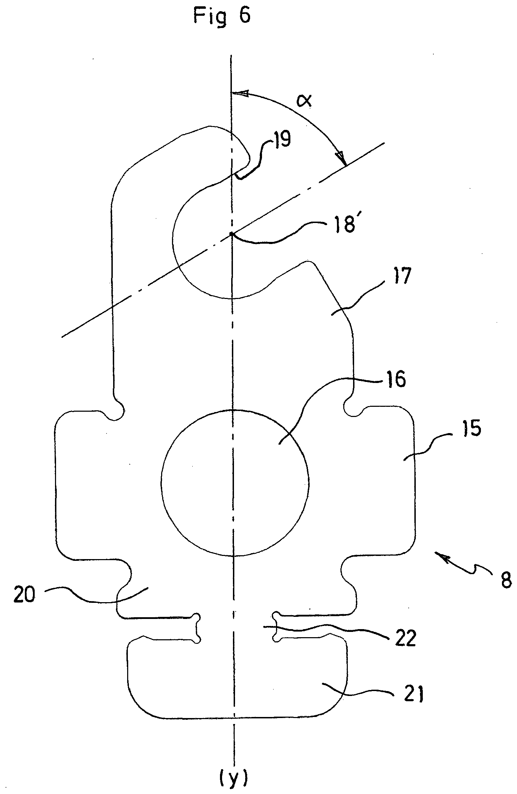

- la figure 6 représente un organe de guidage 8 doté d'une gorge 18' dont le plan de symétrie est incliné d'un angle de 30° par rapport au plan des plaques de base 1-6, et forme donc un angle (α) de 60° avec le plan (y).

De plus, chaque gorge 18, 18' présente une face 19 d'introduction et de retrait du tube T, présentant une largeur sensiblement inférieure au diamètre de la dite gorge, adaptée pour conférer un caractère rétentif à cette dernière. Il est à noter, toutefois que ce caractère rétentif est destiné à l'utilisation des gabarits M à des fins de formage thermique de tubes. Par contre, ce caractère rétentif est supprimé lorsque les gabarits M sont destinés au contrôle de la géométrie de tubes.

Quelle que soit l'orientation de la gorge 18, 18', chacun de ces organes 7, 8 comporte :
- une portion médiane 15 de dimensions adaptées pour former une entretoise définissant la distance séparant les deux plaques de base 1-2, 3-4, 5-6, et dont la partie centrale 16 est évidée à des fins de gain de poids,
- une portion supérieure de guidage 17 dans laquelle est ménagée la gorge 18, 18,
- une portion inférieure 20 d'ancrage prolongée par une portion de verrouillage 21 formant une « clé » ou un « taquet » de verrouillage reliée à la portion d'ancrage 20 par une zone de moindre résistance 22 frangible au-delà d'un degré de déformation de la dite zone frangible.

Une telle « clé » » permet d'assurer un parfait blocage relatif entre les organes de blocage 7-10 et les plaques de base inférieures 1, 3, 5, tout en autorisant un démontage éventuel des gabarits unitaires M1, M2, M3.

Chaque plaque de base 1-6 présente, quant à elle, la forme générale d'un ruban de plaque rigide dont les faces planes sont axées sur un axe coïncidant avec la fibre neutre (x') du tronçon de conduit formé par le gabarit unitaire M1, M2, M3.

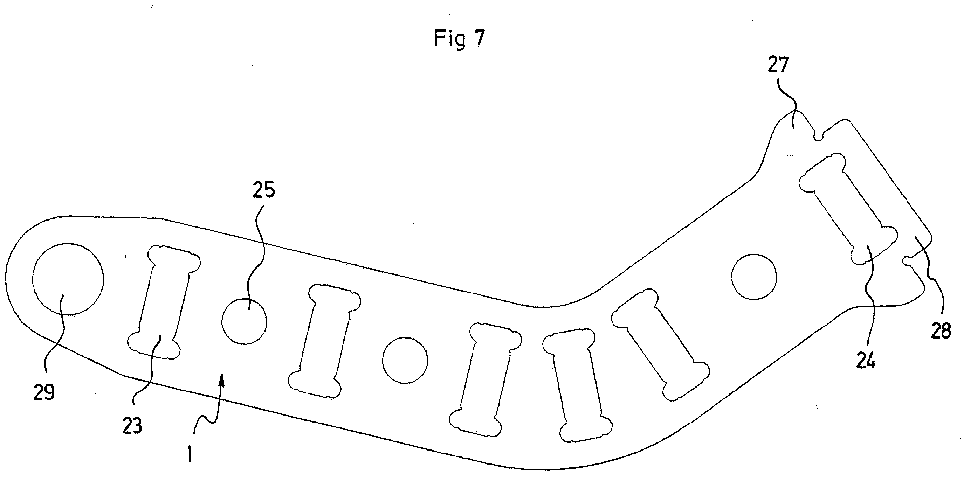

Tel que représenté à titre d'exemple à la figure 7, chacune de ces plaques de base, telle que la plaque 1, est percée de lumières transversales telles que 23, 24 :
- destinées à loger la portion d'ancrage 20 des organes de guidage 7-10 concernant les plaques de base inférieures 1, 3, 5,
- au travers desquelles s'étendent les portions supérieures 17 des organes de guidage 7-10 concernant les plaques de base supérieures 2, 4, 6.

Ces plaques de base 1-6 comportent, en outre, en vue de l'assemblage de chaque gabarit M1, M2, M3 avec le gabarit juxtaposé, au moins un tronçon d'extrémité dit d'ancrage 28 séparé du tronçon courant de la dite plaque de base, par un tronçon dit de butée 27 de largeur supérieure à celle du dit tronçon courant.

De plus, une des lumières transversales 24 est ménagée au niveau de chaque tronçon de butée 27 de façon à jouxter le tronçon d'ancrage 28. Cette lumière 24 est destinée à loger des organes de guidage 9, 10 similaires dans leur conception générale aux organes de guidage courants 7, 8, mais qui se différencient de ces derniers par une portion médiane 15 de largeur supérieure percée, latéralement de part et d'autre de l'évidement central 16, d'orifices pour la mise en place de vis 35 de fixation des dits organes de guidage 9, 10 aux plaques d'interfaces 11-14 adjacentes.

Chacune des plaques de base 1-6 est, en outre, percée d'orifices taraudés tels que 25 pour le vissage de vis de fixation telles que 26 adaptées pour solidariser la plaque de base inférieure 1, 3, 5 et la plaque de base supérieure 2, 4, 6 de chaque gabarit M1, M2, M3 dans une position relative où elles s'étendent parallèlement, à une distance l'une de l'autre définie par la hauteur de la portion médiane 15 des organes de guidage 7-10.

Enfin, une des plaques de base des gabarits unitaires M1 et M3, en l'exemple les plaques de base 1 et 6, est percée d'un oeillet 29 au niveau de son extrémité libre, destiné à permettre de suspendre le gabarit M, notamment dans un four lors de la phase de formage thermique,

Les plaques d'interface 11-14 sont quant à elles percées chacune de deux lumières traversantes 31, 32 adaptées pour loger chacune le tronçon d'ancrage 28 d'une plaque de base 1-6, dans une positon où le tronçon de butée 27 de la dite plaque de base se trouve en butée contre la dite plaque d'interface.

De plus, chacune de ces plaques d'interface 11-14 est percée de deux orifices taraudés 33, 34 pour le vissage des vis de fixation 35 de solidarisation, à chaque plaque d'interface 1-14, de l'organe de guidage 9, 10 adjacent, et donc des plaques de base 1-6 comportant le dit organe de guidage.

En dernier lieu, chaque plaque d'interface 11-14 est également percée de deux orifices taraudés 36, 37 pour le vissage de vis de fixation 38 de solidarisation de deux plaques d'interface 11-12, 13-14 accolées.

Il est, en outre, à noter que la forme générale des plaques d'interface 11-14 est calculée, en fonction des orientations relatives des gabarits M1, M2, M3, de façon que ces dernières, d'une part, présentent des surfaces adaptées pour permettre le percement des différentes lumières 31, 32 et orifices 33, 34, 36, 37, et d'autre part, ne gênent pas le passage du tube T, ce dernier point conduisant à réaliser tel que représenté aux figures, des échancrures telles que 30, 30' de forme adaptée, en outre, pour constituer un appui ponctuel supplémentaire du dit tube.

Les gabarits selon l'invention ci-dessus décrits sont reproductibles simplement de façon industrielle, et présentent une conception adaptée pour permettre de les utiliser soit à des fins de formage de tubes plastiques, soit à des fins de contrôle de tubes cintrés.

## Revendications

1. Proecédé de fabrication d'un gabarit (M) pour le formage thermique et/ou le contrôle d'un tube (T) de fibre neutre (x) comportant n tronçons cintrés (e1-e3) reliés par des tronçons rectilignes (d2-d3), **caractérisé en ce qu'**il consiste:
- à réaliser n gabarits unitaires (M1-M3):
• dédiés chacun a un segment de tube (d1-c1-d2.1, d2.2-c2-d3.1, d3.2-c3-d4) constitué d'un des n tronçons cintrés (c1, c2, c3) du tube (T) et d'une longueur prédéterminée, partielle ou totale, de chacun des tronçons rectilignes (d1-d4) s'étendant dans le prolongement du dit tronçon cintré, de façon que chacun des dits segments de tube comporte une fibre neutre plane (x) s'étendant dans un plan (P1, P2, P3), dit plan de cintrage, correspondant au plan de cintrage du tronçon cintré (c1-c3) du dit segment de tube,
• comportant chacun des moyens de guidage (7-10) délimitant un tronçon de conduit de guidage ouvert (18, 18') de fibre neutre plane (x') s'étendant dans un plan (P'1, P'2, P'3), chacun des tronçons de conduit de guidage présentant, d'une part, le profil longitudinal du segment de tube (d1-c1-d2.1, d2.2-c2-d3.1, d3.2-c3-d4), et, d'autre part, une section adaptée pour loger ce dernier, dans lequel les moyens de guidage sont constitués d'organes de guidage ponctuel (7-10) comportant une gorge (18, 18') de section conjuguée de celle du tube (T), formant un conduit matérialisé par une succession d'appuis ponctuels du dit tube, et
• une base (1-2, 3-4, 5-6) constituée de deux plaques de base planes (1-2, 3-4, 5-6) assemblées au moyen d'organes de fixation (26) aptes à les maintenir parallèles, à une distance prédéterminée l'une de l'autre, une plaque de base inférieure (2, 4, 6), dans laquelle sont ménagées une pluralité de lumières (23, 24) alignées le long d'une ligne longitudinale parallèle à la fibre neutre plane (x') et des organes de guidage plans (7-10) adaptés pour s'enficher dans les lumières (23, 24) de la plaque de base inférieure (2, 4, 6) de chaque base (1-2, 3-4, 5-6), de façon que les gorges (18, 18') des dits organes de guidage soient axées sur la fibre neutre (x'), dans lequelle une portion (20) d'ancrage des organes de guidage (7-10) vient s'enficher dans les lumières (23, 24),
et une plaque de base supérieure (1, 3, 5), percée de lumières (23, 24) au travers desquelles s'étend une portion de guidage (17) des organes de guidage (7-10), dans laquelle est ménagée la gorge de guidage (18, 18'),
des organs de guidage (7-10) comportant une portion médiane (15) de dimensions adaptées pour former une entretoise définissant la distance séparant les deux plaques de base (1-2, 3-4, 5-6) de chaque base
- a juxtaposer les n gabarits unitaires (M1-M3) avec les tronçons de conduit de guidage (18, 18') dans le prolongement les uns des autres, et à orienter relativement les dits gabarits unitaires de façon à obtenir une orientation relative entre les n plans (P'1, P'2, P'3) définis par les fibres neutres (x') des n tronçons de conduit de guidage (18, 18'), identique à l'orientation relative entre les n plans de cintrage (P1, P2, P3) définis par les n tronçons cintrés (c1-c3) du tube (T),
- et à solidariser entre eux les n gabarits unitaires (M1-M3).

2. Procédé selon la revendieation 1 **caractérisé en ce que** l'on réalise des gabarits unitaires (M1-M3) dotés de moyens de guidage délimitant un conduit de guidage global de section non rétentive adaptée pour permettre l'introduction du tube dans le dit conduit et le retrait du dit tube.

3. Procédé selon la revendication 1 **caractérisé en ce que** l'on réalise des gabarits unitaires (M1-M3) dotés de moyens de guidage délimitant conduit de guidage global (18, 18') de section rétentive adaptée pour permettre l'introduction et le maintien du tube (T) dans le dit conduit puis le retrait du dit tube.

4. Procédé selon l'une des revendications précédentes **caractérisé en ce que** l'on réalise une gamme d'organes de guidage ponctuel (7-10) dotés de gorges (18, 18') présentant des plans de symétrie, incluant la fibre neutre (x'), dont l'inclinaison par rapport au plan de chaque plaque de base inférieure (2, 4, 6) varie sur une plage de valeurs comprises entre 0° et 90°.

5. Procédé selon l'une des revendications précédentes **caractérisé en ce que** l'on réalise une plaque de base inférieure (2, 4, 6) dotée de lumières (23, 24) traversantes, et des organes de guidage (7-10) dotés, dans le prolongement de leur portion d'ancrage (20), d'une portion deformable (21) de verrouillage des dits organes de guidage.

6. Procédé selon la revendication 5 **caractérisé en ce que** l'on réalise des organes de guidage (7-10) dotés d'une portion déformable de verrouillage (21) frangible au-delà d'un degré prédéterminé de deformation.

7. Procédé selon l'une des revendications précédentes **caractérisé en ce que** l'on réalise des gabarits unitaires (M1-M3) comportant, en vue de leur assemblage avec un gabarit unitaire juxtaposé, une plaque d'interface (11-14) dotée, pour chaque plaque de base (1-2, 3-4, 5-6), d'une lumière (31, 32) d'ancrage de la dite plaque de base.

8. Procédé selon la revendication 7 **caractérisé en ce que** l'on réalise une base (1-2, 3-4, 5-6) dont la plaque de base inférieure (2, 4, 6) comporte, pour chaque plaque d'interface (11-14), une lumière (24) ménagée de façon a être accolée à la dite plaque d'interface, et en que l'on enfiche, dans la dite lumière, un organe de guidage (9, 10) doté de moyens de fixation (35) adaptés pour le solidariser à la plaque d'interface (11-14).

9. Procédé selon l'une des revendications précédentes pour la réalisation d'un gabarit (M) pour le formage thermique d'un tube (T), **caractérisé en ce que** l'on ménage, au niveau de l'extrémité libre de la base (1-2, 3-4, 5-6) d'au moins un des gabarits unitaires (M1, M3) dédiés a un segment d'extrémité du tube (T), un oeillet (29) destiné au maintien par suspension du gabarit (M).

10. Gabarit (M) pour le formage thermique et/ou le contrôle d'un tube (T) de fibre neutre (x) comportant n tronçons cintrés (c1-c3) reliés par des tronçons rectilignes (d2-d3), **caractérisé en ce qu'**il comprend :
- n gabarits unitaires (M1-M3) dédiés chacun a un segment de tube (d1-c1-d2.1, d2.2-c2-d3.1, d3.2-c3-d4) de fibre neutre plane (x) s'étendant dans un plan (P1, P2, P3), dit plan de cintrage, correspondant au plan de cintrage du tronçon cintré (c1-c3) du dit segment de tube, constitué d'un des n tronçons cintrés (c1-c3) du tube (T) et d'une longueur prédéterminée, partielle ou totale, de chacun des tronçons rectilignes (d1-d4) s'étendant dans le prolongement du dit tronçon cintré,
chacun des dits gabarits unitaires comportant des moyens de guidage (7-10) délimitant un tronçon de conduit de guidage ouvert (18, 18'), de fibre neutre plane (x'), présentant, d'une part, le profil longitudinal du segment de tube (d1-c1-d2.1, d2.2-c2-d3.1, d3.2- c3-d4), et, d'autre part, une section adaptée pour loger ce dernier, dans lequel les moyens de guidage sont constitués d'organes de guidage ponctuel (7-10) comportant une gorge (18, 18') de section conjuguée de celle du tube (T), formant un conduit matérialisé par une succession d'appuis ponctuels du dit tube; et
une base (1-2, 3-4, 5-6) constituée de deux plaques de base planes (1-2, 3-4, 5-6) assemblées au moyen d'organes de fixation (26) aptes à les maintenir parallèles, à une distance prédéterminée l'une de l'autre, une plaque de base inférieure (2, 4, 6), dans laquelle sont ménagées une pluralité de lumières (23, 24) alignées le long d'une ligne longitudinale parallèle à la fibre neutre plane (x') et des organes de guidage plans (7-10) adaptés pour s'enficher dans les lumières (23, 24) de la plaque de base inférieure (2, 4, 6) de chaque base (1-2, 3-4, 5-6), de façon que les gorges (18, 18') des dits organes de guidage soient axées sur la fibre neutre (x'), dans lequelle une portion (20) d'ancrage des organes de guidage (7-10) vient s'enficher dans les lumières (23, 24), et une plaque de base supérieure (1, 3, 5), percée de lumières (23, 24) au travers desquelles s'étend une portion de guidage (17) des organes de guidage (7-10), dans laquelle est ménagée la gorge de guidage (18, 18'), des organs de guidage (7-10) comportant une portion médiane (15) de dimensions adaptées pour former une entretoise définissant la distance séparant les deux plaques de base (1-2, 3-4, 5-6) de chaque base;
- des moyens d'assemblage (11-14, 35, 38) des n gabarits unitaires (M1-M3) adaptés pour les solidariser avec les tronçons de conduit de guidage (18, 18') dans le prolongement les uns des autres, et avec une orientation relative des dits gabarits unitaires adaptée pour que l'orientation relative entre les n plans (P'1, P'2, P'3) définis par les fibres neutres (x') des n tronçons de conduit de guidage (18, 18') soit identique à l'orientation relative entre les n plans de cintrage (P1, P2, P3) définis par les n tronçons cintrés (c1-c3) du tube (T).

## Patentansprüche

1. Verfahren zum Herstellung einer Schablone (M) für das thermische Formen und/oder das Prüfen einer Röhre (T) mit neutraler Achse (x), umfassend n gebogene Abschnitte (e1-e3), die durch geradlinige Abschnitte (d2-d3) verbunden sind, **dadurch gekennzeichnet, dass** das Verfahren aus den folgenden Schritten besteht:
- Erstellen von n einheitlichen Schablonen (M1-M3):
• wobei die Schablonen jeweils einem Röhrensegment (d1-c1-d2.1, d2.2-c2-d3.1, d3.2-c3-d4) zugeordnet sind, das aus einem der n gebogenen Abschnitte (c1, c2, c3) der Röhre (T) und von einer vorbestimmten, teilweisen oder vollständigen Länge von jedem der geradlinigen Abschnitte (d1-d4) besteht, die sich in der Verlängerung des gebogenen Abschnitts derart erstrecken, dass jedes der Röhrensegmente eine ebene neutrale Achse (x) aufweist, die sich in einer Ebene (P1, P2, P3) erstreckt, die Biegeebene genannt wird, die der Biegeebene des gebogenen Abschnitts (c1-c3) des Röhrensegments entspricht,
• wobei die Schablonen jeweils Führungsmittel (7-10) aufweisen, die einen offenen Abschnitt des Führungskanals (18, 18') mit ebener neutraler Achse (x') begrenzen, der sich in einer Ebene (P'1, P'2, P'3) erstreckt, wobei jeder der Abschnitte des Führungskanals einerseits das Längsprofil des Röhrensegments (d1-c1-d2.1, d2.2-c2-d3.1, d3.2-c3-d4) und andererseits einen Abschnitt bildet, der geeignet ist, um das Röhrensystem aufzunehmen, wobei die Führungsmittel aus punktuellen Führungsorganen (7-10) gebildet sind, die eine Kehle (18, 18') mit einem Querschnitt aufweisen, der jenem der Röhre (T) entspricht, die einen Kanal bilden, der durch eine Abfolge von punktuellen Auflagen der Röhre gebildet ist, und
• wobei eine Basis (1-2, 3-4, 5-6) vorgesehen ist, die aus zwei flachen Grundplatten (1-2, 3-4, 5-6) gebildet ist, die mit Hilfe von Befestigungsorganen (26) zusammengefügt sind, die geeignet sind, die Grundplatten in einem vorbestimmten Abstand voneinander parallel zu halten,
eine untere Grundplatte (2, 4, 6), in der mehrere Öffnungen (23, 24) ausgebildet sind, die entlang einer Längslinie ausgerichtet sind, die zu der ebenen neutralen Achse (x') parallel ist, und ebene Führungsorgane (7-10), die geeignet sind, um in die Öffnungen (23, 24) der unteren Grundplatte (2, 4, 6) jeder Basis (1-2, 3-4, 5-6) derart eingesteckt zu werden, dass die Kehlen (18, 18') der Führungsorgane auf die neutrale Achse (x') ausgerichtet sind, wobei ein Verankerungsabschnitt (20) der Führungsorgane (7-10) in die Öffnungen (23, 24) eingesteckt wird,
und eine obere Grundplatte (1, 3, 5), die von Öffnungen (23, 24) durchbrochen ist, durch die sich ein Führungsabschnitt (17) der Führungsorgane (7-10) erstreckt, in dem die Führungskehle (18, 18') ausgebildet ist,
Führungsorgane (7-10), die einen mittleren Abschnitt (15) von Abmessungen aufweisen, die geeignet sind einen Abstandhalter zu bilden, der den Abstand definiert, der die zwei Grundplatten (1-2, 3-4, 5-6) von jeder Basis trennt,
- Aneinanderreihen der n einheitliche Schablonen (M1-M3) mit den Abschnitten des Führungskanals (18, 18') in gegenseitiger Verlängerung und relatives Ausrichten der einheitlichen Schablonen derart, um eine relative Ausrichtung zwischen den n Ebenen (P'1, P'2, P'3) zu erhalten, die durch die neutralen Achsen (x') der n Abschnitte des Führungskanals (18, 18') definiert werden, die mit der relativen Ausrichtung zwischen den n Biegeebenen (P1, P2, P3) identisch ist, die von den n gebogenen Abschnitten (c1-c3) der Röhre (T) definiert werden,
- und Verbinden der einheitlichen Schablonen (M1-M3) miteinander.

2. Verfahren nach Anspruch 1, **dadurch gekennzeichnet, dass** einheitliche Schablonen (M1-M3) erstellt werden, die mit Führungsmitteln versehen sind, die einen allgemeinen Führungskanal mit einem nicht retentiven Abschnitt begrenzen, der geeignet ist, um das Einführen der Röhre in den Kanal und das Herausnehmen der Röhre zu ermöglichen.

3. Verfahren nach Anspruch 1, **dadurch gekennzeichnet, dass** einheitliche Schablonen (M1-M3) erstellt werden, die mit Führungsmitteln versehen sind, die einen allgemeinen Führungskanal (18, 18') mit einem retentiven Abschnitt begrenzen, der geeignet ist, um das Einfügen und das Halten der Röhre (T) in den Kanal und dann das Herausnehmen der Röhre zu ermöglichen.

4. Verfahren nach einem der vorhergehenden Ansprüche, **dadurch gekennzeichnet, dass** eine Reihe von punktuellen Führungsorganen (7-10) erstellt wird, die mit Kehlen (18, 18') versehen sind, die Symmetrieebenen aufweisen, die die neutrale Achse (x') einschließen, wobei die Neigung gegenüber der Ebene von jeder unteren Grundplatte (2, 4, 6) über einen Bereich von Werten variiert, die zwischen 0° und 90° liegen.

5. Verfahren nach einem der vorhergehenden Ansprüche, **dadurch gekennzeichnet, dass** eine untere Grundplatte (2, 4, 6), die mit durchgehenden Öffnungen (23, 24) versehen ist, und Führungsorgane (7-10) erstellt werden, die in der Verlängerung von ihrem Verankerungsabschnitt (20) mit einem verformbaren Verriegelungsabschnitt (21) der Führungsorgane versehen sind.

6. Verfahren nach Anspruch 5, **dadurch gekennzeichnet, dass** Führungsorgane (7-10) erstellt werden, die mit einem verformbaren Verriegelungsabschnitt (21) versehen sind, der jenseits eines vorbestimmten Verformungsgrades brechbar ist.

7. Verfahren nach einem der vorhergehenden Ansprüche, **dadurch gekennzeichnet, dass** einheitliche Schablonen (M1-M3) erstellt werden, die zur ihrer Verbindung mit einer aneinandergereihten Schablone eine Verbindungsplatte (11-14) aufweisen, die für jede Grundplatte (1-2, 3-4, 5-6) mit einer Öffnung (31, 32) zum Verankern der Grundplatte versehen ist.

8. Verfahren nach Anspruch 7, **dadurch gekennzeichnet, dass** eine Basis (1-2, 3-4, 5-6) erstellt wird, deren untere Grundplatte (2, 4, 6) für jede Verbindungsplatte (11-14) eine Öffnung (24) aufweist, die derart ausgebildet ist, um an die Verbindungsplatte angefügt zu werden, und dass ein Führungsorgan (9, 10) in die Öffnung eingesteckt wird, das mit Befestigungsmitteln (35) versehen ist, die geeignet sind, das Führungsorgan mit der Verbindungsplatte (11-14) fest zu verbinden.

9. Verfahren nach einem der vorhergehenden Ansprüche zur Herstellung einer Schablone (M) für das thermische Formen einer Röhre (T), **dadurch gekennzeichnet, dass** auf Ebene des freien Endes der Basis (1-2, 3-4, 5-6) von mindestens einer der einheitlichen Schablonen (M1-M3), die einem Endsegment der Röhre (T) zugehörig sind, eine Öse (29) ausgebildet wird, die zum Halten der Schablone (M) durch Aufhängung bestimmt ist.

10. Schablone (M) für das thermische Formen und/oder das Prüfen einer Röhre (T) mit einer neutralen Achse (x), umfassend n gebogene Abschnitte (c1-c3), die durch geradlinige Abschnitte (d2-d3) verbunden sind, **dadurch gekennzeichnet, dass** die Schablone aufweist:
- n einheitliche Schablonen (M1-M3), die jeweils einem Röhrensegment (d1-c1-d2.1, d2.2-c2-d3.1, d3.2-c3-d4) mit ebener neutraler Achse (x) zugeordnet sind, die sich in einer Ebene (P1, P2, P3) erstreckt, die Biegeebene genannt wird, die der Biegeebene des gebogenen Abschnitts (c1-c3) des Röhrensegments entspricht, das aus einem der n gebogenen Abschnitte (c1-c3) der Röhre (T) besteht und von einer vorbestimmten, teilweisen oder vollständigen Länge von jedem der geradlinigen Abschnitte (d1-d4), die sich in der Verlängerung des gebogenen Abschnitts erstreckt,
wobei jede der einheitlichen Schablonen Führungsmittel (7-10) aufweist, die einen offenen Abschnitt des Führungskanals (18, 18') mit ebener neutraler Achse (x') begrenzen, der einerseits das Längsprofil des Röhrensegments (d1-c1-d2.1, d2.2-c2-d3.1, d3.2-c3-d4) und andererseits einen Abschnitt aufweist, der geeignet ist, um dieses Letztere aufzunehmen, wobei die Führungsmittel aus punktuellen Führungsorganen (7-10) gebildet sind, die eine Kehle (18, 18') von einem Querschnitt aufweisen, der jenem der Röhre (T) entspricht, die einen Kanal bilden, der durch eine Abfolge von punktuellen Auflagen der Röhre gebildet ist, und
eine Basis (1-2, 3-4, 5-6), die aus zwei flachen Grundplatten (1-2, 3-4, 5-6) gebildet ist, die mit Hilfe von Befestigungsorganen (26) zusammengefügt sind, die geeignet sind, sie in einem vorbestimmten Abstand voneinander parallel zu halten,
eine untere Grundplatte (2, 4, 6), in der mehrere Öffnungen (23, 24) ausgebildet sind, die entlang einer Längslinie ausgerichtet sind, die zu der ebenen neutralen Achse (x') parallel ist, und ebene Führungsorgane (7-10), die geeignet sind, um in die Öffnungen (23, 24) der unteren Grundplatte (2, 4, 6) von jeder Basis (1-2, 3-4, 5-6) derart eingesteckt zu werden, dass die Kehlen (18, 18') der Führungsorgane auf die neutrale Achse (x') ausgerichtet sind, wobei ein Verankerungsabschnitt (20) der Führungsorgane (7-10) in die Öffnungen (23, 24) eingesteckt wird, und eine obere Grundplatte (1, 3, 5), die von Öffnungen (23, 24) durchbrochen ist, durch die sich ein Führungsabschnitt (17) der Führungsorgane (7-10) erstreckt, in dem die Führungskehle (18, 18') ausgebildet ist, Führungsorgane (7-10), die einen mittleren Abschnitt (15) aufweisen mit Abmessungen, die geeignet sind einen Abstandhalter zu bilden, der den Abstand definiert, der die zwei Grundplatten (1-2, 3-4, 5-6) von jeder Basis trennt,
- Verbindungsmittel (11-14, 35, 38) der n einheitliche Schablonen (M1-M3), die geeignet sind, sie mit den Abschnitten des Führungskanals (18, 18') in der Verlängerung voneinander fest zu verbinden, und mit einer relative Ausrichtung der einheitlichen Schablonen, die geeignet ist, dass die relative Ausrichtung zwischen den n Ebenen (P'1, P'2, P'3), die durch die neutralen Achsen (x') der n Abschnitte des Führungskanals (18, 18') gebildet sind, mit der relativen Ausrichtung zwischen den n Biegeebenen (P1, P2, P3) identisch ist, die von den n gebogenen Abschnitten (c1-c3) der Röhre (T) definiert sind.

## Claims

1. A method for producing a jig (M) for the thermal forming and/or inspection of a tube (T) of neutral axis (x) comprising n bent sections (e1-e3) connected by straight sections (d2-d3), **characterized in that** it consists in:
- producing n unitary jigs (M1-M3):
• each dedicated to a tube segment (d1-c1-d2.1, d2.2-c2-d3.1, d3.2-c3-d4) made up of one of the n bent sections (c1, c2, c3) of the tube (T) and of a predetermined length, in part or in full, of each of the straight sections (d1-d4) extending in the continuation of said bent section, so that each of said tube segments comprises a planar neutral axis (x) that extends into a plane (P1, P2, P3), designated the bending plane, corresponding to the bending plane of the bent section (c1-c3) of said tube segment,
• each comprising guiding means (7-10) delimiting an open guiding duct section (18, 18') of planar neutral axis (x') extending in a plane (P'1, P'2 P'3), with each of the guiding duct sections showing on the one hand the longitudinal profile of the tube segment (d1-c1-d2.1, d2.2-c2-d3.1, d3.2-c3-d4) and on the other hand a section adapted to house the latter, wherein the guiding means are made up of pinpoint guiding components (7-10) comprising a groove (18, 18') with a section coupled to that of the tube (T), forming a duct made up of a succession of pinpoint supports of the said tube, and
• a base (1-2, 3-4, 5-6) constituted by two planar base plates (1-2, 3-4, 5-6) assembled by means of securing components (26) able to keep them parallel, at a predetermined distance from one another, a bottom base plate (2, 4, 6), in which a plurality of ports (23, 24) are arranged, aligned along a longitudinal line parallel to the planar neutral axis (x') and planar guiding components (7-10) adapted for insertion in the ports (23, 24) of the bottom base plate (2, 4, 6) of each base (1-2, 3-4, 5-6), so that the grooves (18, 18') of said guiding components are oriented towards the neutral axis (x'), in which an anchoring portion (20) of the guiding components (7-10) comes to be inserted in the ports (23, 24),
and a top base plate (1, 3, 5), pierced with ports (23, 24) through which extends a guiding portion (17) of the guiding components (7-10), in which the guiding groove (18, 18') is arranged,
guiding components (7-10) comprising a median portion (15) with dimensions adapted to form a spacer defining the distance separating the two base plates (1-2, 3-4, 5-6) of each base,
- juxtaposing the n unitary jigs (M1-M3) with the guiding duct sections (18, 18') in the continuation of each other, and orienting in a relative manner said unitary jigs so as to obtain a relative orientation between the n planes (P'1, P'2, P'3) defined by the neutral axes (x') of the n guiding duct sections (18, 18'), identical to the relative orientation between the n bending planes (P1, P2, P3) defined by the n bent sections (c1-c3) of the tube (T),
- and coupling with respect to one another the n unitary jigs (M1-M3).

2. Method according to claim 1, **characterized in that** unitary jigs (M1-M3) are produced, provided with guiding means delimiting an overall guiding duct with a non-retentive section adapted to permit the introduction of the tube in said duct and the removal of said tube.

3. Method according to claim 1, **characterized in that** unitary jigs (M1-M3) are produced, provided with guiding means delimiting an overall guiding duct (18, 18') of retentive section adapted to permit the introduction and keeping in place of the tube (T) in said duct, then the removal of said tube.

4. Method according to one of the preceding claims, **characterized in that** a range of pinpoint guiding components (7-10) is produced, provided with grooves (18, 18') showing planes of symmetry, including the neutral axis (x'), the incline of which with respect to the plane of each bottom base plate (2, 4, 6) varies over a range of values comprised between 0° and 90°.

5. Method according to one of the preceding claims, **characterized in that** a bottom base plate (2, 4, 6) is produced, provided with transversal ports (23, 24), and guiding components (7-10) are provided, in the continuation of their anchoring portion (20), with a deformable portion (21) that locks said guiding components.

6. Method according to claim 5, **characterized in that** guiding components (7-10) are produced, provided with a deformable locking portion (21) that is frangible beyond a predetermined degree of deformation.

7. Method according one of the preceding claims, **characterized in that** unitary jigs (M1-M3) are produced comprising, for their assembly with a juxtaposed unitary jig, an interface plate (11-14) provided, for each base plate (1-2, 3-4, 5-6), with a port (31, 32) for anchoring said base plate.

8. Method according to claim 7, **characterized in that** a base (1-2, 3-4, 5-6) is produced, the bottom base plate (2, 4, 6) of which comprises, for each interface plate (11-14), a port (24) arranged so as to be joined to said interface plate, and **in that** there is inserted, in said port, a guiding component (9, 10) provided with securing means (35) adapted for connecting it to the interface plate (11-14).

9. Method according to one of the preceding claims for producing a jig (M) for the thermal forming of a tube (T), **characterized in that** there is arranged, at the free end of the base (1-2, 3-4, 5-6) of at least one of the unitary jigs (M1, M3) dedicated to an end segment of the tube (T), an eyelet (29) intended for holding the jig (M) by suspension.

10. A jig (M) for thermal forming and/or inspecting of a tube (T) of neutral axis (x) comprising n bent sections (c1-c3) connected by straight sections (d2-d3), **characterized in that** it includes:
- n unitary jigs (M1-M3), each dedicated to a tube segment (d1-c1-d2.1, d2.2-c2-d3.1, d3.2-c3-d4) of planar neutral axis (x) extending in a plane (P1, P2, P3), designated the bending plane, corresponding to the bending plane of the bent section (c1-c3) of said tube segment, constituted by one of the n bent sections (c1-c3) of the tube (T) and having a predetermined length, in part or in full, of each of the straight sections (d1-d4) extending in the continuation of said bent section, each of said unitary jigs comprising guiding means (7-10) delimiting an open guiding duct section (18, 18'), of planar neutral axis (x'), showing on the one hand the longitudinal profile of the tube segment (d1-c1-d2.1, d2.2-c2-d3.1, d3.2-c3-d4), and, on the other hand, a section adapted to house the latter, in which the guiding means are constituted by pinpoint guiding components (7-10) comprising a groove (18, 18') with a section coupled to that of the tube (T), forming a duct made up of a succession of pinpoint supports of said tube; and
a base (1-2, 3-4, 5-6) constituted by two planar base plates (1-2, 3-4, 5-6) assembled by means of securing components (26) able to keep them parallel, at a predetermined distance from one another,
a bottom base plate (2, 4, 6), in which a plurality of ports (23, 24) is arranged, aligned along a longitudinal line parallel to the planar neutral axis (x'), and planar guiding components (7-10), adapted for insertion in the ports (23, 24) of the bottom base plate (2, 4, 6) of each base (1-2, 3-4, 5-6), so that the grooves (18, 18') of said guiding components are aligned to the neutral axis (x'), in which an anchoring portion (20) of the guiding components (7-10) comes to be inserted in the ports (23, 24), and an upper base plate (1, 3, 5), pierced with ports (23, 24) through which extends a guiding portion (17) of the guiding components (7-10), in which there is arranged the guiding groove (18, 18') of the guiding components (7-10) comprising a median portion (15) with dimensions adapted to form a spacer defining the distance separating the two base plates (1-2, 3-4, 5-6) of each base;
- assembly means (11-14, 35, 38) of the n unitary jigs (M1-M3) adapted to connect them with the guiding duct sections (18, 18') in the continuation of one another, and with a relative orientation of said unitary jigs adapted so that the relative orientation between the n planes (P'1, P'2, P'3) defined by the neutral axes (x') of the n guiding duct sections (18, 18') is identical to the relative orientation between the n bending planes (P1, P2, P3) defined by the n bent sections (c1-c3) of the tube (T).
